# EUROPÄISCHE PATENTSCHRIFT

(11) **EP 1 260 294 B1**
(45) Veröffentlichungstag und Bekanntmachung des Hinweises auf die Patenterteilung: **06.07.2005**
(21) Anmeldenummer: 02010649.8
(22) Anmeldetag: 13.05.2002
(51) Int. Cl.: B23B 3/16

(54) **Verfahren und Vorrichtung zur Drehbearbeitung**
Process and device for turning
Méthode et dispositif de tournage

(30) Priorität: 18.05.2001 AT 4072001 U
(43) Veröffentlichungstag der Anmeldung: 27.11.2002
(73) Patentinhaber: CERATIZIT Austria Gesellschaft m.b.H., 6600 Reutte /Tirol (AT)
(72) Erfinder: Maier, Johann, 6600 Pflach (AT)
(74) Vertreter: Lohnert, Wolfgang, Dr.

(56) Entgegenhaltungen:
- DE-A- 2 637 792
- US-A- 3 725 987
- US-A- 4 683 626

## Beschreibung

Die Erfindung betrifft ein Verfahren zur Drehbearbeitung auf einer Drehmaschine oder einer Bearbeitungseinrichtung unter Verwendung eines Werkzeugkopfes mit einem Fußteil zur rasch lösbaren Verbindung mit einer Aufnahmevorrichtung über welche er mit einer Drehachse D im Zuge der Bearbeitung maschinell verdreht werden kann und der mit einem oder mehreren Schneideinsätzen bestückt ist, die während der Bearbeitung einzeln zum Einsatz kommen.

Kennzeichnend für alle Drehbearbeitungen ist es, dass die Schnittbewegung für die spanabhebende Bearbeitung vom Werkstück ausgeführt wird. Dazu wird das Werkstück in die Spindelaufnahme einer Drehmaschine oder einer Bearbeitungseinrichtung eingespannt und in Rotation versetzt. Die Vorschub- und Zustellbewegungen des Schneidwerkzeuges zur Werkstückbearbeitung werden je nach Konstruktion der Drehmaschine ausschließlich durch Bewegen des Schneidwerkzeuges oder durch eine Bewegung der Drehmaschinenspindel mit dem eingespannten Werkstück allein oder kombiniert mit einer Bewegung des Schneidwerkzeuges, durchgeführt.
Die bei der Drehbearbeitung möglichen relativen Positionsänderungen des Schneidwerkzeuges sind durch genormte Achsenbezeichnungen gekennzeichnet, wobei die Grundlage der Achsendefinition das rechtshändige, rechtwinkelige Koordinationssystem mit den Achsen X, Y und Z ist, das auf die Hauptführungsbahnen der Bearbeitungsmaschine ausgerichtet ist.
Die Achse, die mit der Drehachse des Werkstückes zusammenfällt bzw. zu dieser parallel verläuft, ist als Z-Achse festgelegt, während die Achse senkrecht zur Z-Achse, welche die Hauptachse in der Positionierebene parallel zur Werkstück-Aufspannebene ist, als X-Achse festgelegt ist. In Abhängigkeit von der Konstruktion der Drehmaschine, ob es sich um eine Flachbett- oder eine Schrägbettkonstruktion handelt, verlauft die durch die X- und Z- Achse bestimmte Ebene waagrecht oder schräg. Die Lage der Y-Achse ergibt sich zwangsläufig aus der Definition nach dem rechtshändigen, rechtwinkeligen Koordinationssystem durch das Festlegen von X- und Z-Achse.

Erfolgt die Vorschubbewegung des Schneidwerkzeuges in Richtung Z-Achse und die Zustellbewegung in Richtung X-Achse, handelt es sich um eine Längsdrehbearbeitung, während bei einer Vorschubbewegung in Richtung X-Achse und einer Zustellbewegung in Richtung Z-Achse eine Plandrehbearbeitung durchgeführt wird. Schon bei der Bearbeitung verhältnismäßig einfacher Werkstücke ist es für eine wirtschaftliche Bearbeitung erforderlich, Plandrehen und Längsdrehen in jeweils beiden möglichen Richtungen miteinander zu kombinieren, was in der Regel nur unter Einsatz mehrerer unterschiedlicher Schneidwerkzeuge machbar ist. Zur Herstellung komplexer geformter Werkstücke mit speziellen Ausgestaltungen, wie Schultern, kugelförmigen Oberflächenabschnitten, oder speziellen Ausgestaltungen von Bohrungen, ist eine nochmals größere Zahl unterschiedlicher Schneidwerkzeuge notwendig, die in der Regel nacheinander zum Einsatz kommen.

Zur eindeutigen Definition und Beschreibung der Winkel am Schneidenteil eines Schneidwerkzeuges gibt es genormte Werkzeugbezugssysteme. So ist beispielsweise bei Drehwerkzeugen nach DIN 6581 eine Ebene durch einen ausgewählten Punkt der Schneidkante senkrecht zur angenommenen, in Einsatzstellung der Schneidkante auftretenden Schnittrichtung, als Werkzeugbezugsebene Pᵣ festgelegt.

Die Schneidwerkzeuge bestehen heutzutage praktisch ausnahmslos aus Schneideinsätzen in Form von Wendeschneidplatten, aus unterschiedlichen Schneidwerkstoffen mit vielfältigen Geometrien, welche in der Regel einzeln, unter Berücksichtigung der bei der Zerspanung notwendigen Bearbeitungswinkel, wie Anstellwinkel, Freiwinkel und Spanwinkel, in individuell angepassten Werkzeughaltern oder Werkzeugköpfen positioniert sind.

Bei einfachen Drehmaschinen sind in der Regel bis maximal 4 Stück dieser Werkzeughalter um 90° zueinander versetzt in einer Werkzeugaufnahme angeordnet, mit welcher sie durch händisches Verdrehen der Werkzeugaufnahme je nach Bedarf nacheinander zum Einsatz gebracht werden können.

Bei komplexeren automatisierten Drehmaschinen werden die unterschiedlichen Werkzeughalter in sogenannten Werkzeugrevolvern eingespannt, mit denen die einzelnen Werkzeughalter durch maschinelles Verdrehen des Werkzeugrevolvers um eine Drehachse gezielt zum Einsatz gebracht werden. In hochmodernen Dreh- bzw. Bearbeitungseinrichtungen, welche vielfach mit zwei unabhängig voneinander antreibbaren gegenüberliegenden Drehspindeln arbeiten, kommen vielfach zwei Werkzeugrevolver zum Einsatz, die vor und hinter den Drehspindeln jeweils in Richtung der X- und Z-Achse verfahrbar und zudem mit einer Drehachse parallel zur Z-Achse verdrehbar sind. Die einzelnen Werkzeughalter sind entweder an der Stirnseite des Werkzeugrevolvers in bestimmten Winkelabschnitten starr befestigt, oder vielfach auch über spezielle rotationssymmetrische Aufnahmen in bestimmten Winkelabständen an der Stirnseite oder an der Umfangsfläche des Werkzeugrevolvers drehbar befestigt. Damit können derartige rotationssymmetrische Werkzeugaufnahmen auch maschinell antreibbar ausgeführt sein, so dass auch Bohr- und Fräswerkzeuge vom Werkzeugrevolver aufgenommen werden können und damit eine Erweiterung der Bearbeitungsmöglichkeiten an der Drehmaschine bzw. an der Bearbeitungseinrichtung geschaffen wird.

Eine Drehmaschine, die mit zwei derartigen Werkzeugrevolvern arbeitet, ist beispielsweise in der US 3 725 987 beschrieben. Einer dieser Werkzeugrevolver ist dabei in der Z-Achse verfahrbar und weist eine Drehachse senkrecht zur X-Achse und senkrecht zur Z-Achse auf. Der Werkzeugrevolver ist mit 4 jeweils um 90° versetzten Werkzeughaltern mit Schneideinsätzen bestückt. Jeder Schneideinsatz weist eine Werkzeugbezugsebene Pᵣ durch jeweils gleiche, ausgewählte Schneidenpunkte senkrecht zur angenommenen Schnittrichtung entsprechend DIN 6581 auf und verläuft senkrecht zur Drehachse des Werkzeugrevolvers. Durch maschinelles Verdrehen des Werkzeugrevolvers um jeweils 90° werden die einzelnen Schneideinsätze nacheinander zum Einsatz gebracht.

Der Nachteil bei diesen vollautomatisierten Drehmaschinen bzw. Bearbeitungseinrichtungen unter Verwendung von Werkzeugrevolvern liegt darin, dass die Lage der einzelnen Werkzeughalter in der Regel nicht derart verändert werden kann, dass sich während der Drehbearbeitung mit einem Werkzeughalter unterschiedliche Anstellwinkel der Wendeschneidplatten einstellen lassen, so dass nach wie vor auch für die reine Drehbearbeitung eine Vielzahl von unterschiedlichen Werkzeugen mit an die unterschiedlichen Anstellwinkel der Wendeschneidplatten angepassten Aufnahmen für eine große Zahl von verschiedenen Wendeschneidplattenformen notwendig sein kann. Da auch hier in der Regel jede Wendeschneidplatte einzeln in einem eigenen Werkzeughalter angeordnet ist, muss der für die Aufnahme dieser Werkzeughalter vorgesehene Werkzeugrevolver groß ausgelegt werden und wird dadurch sehr schwer. Diese große Masse muss schnell und präzise bewegt werden, was sich nur mit einem sehr großen konstruktiven Aufwand bewerkstelligen lässt und damit diese Art von Drehmaschinen sehr aufwändig macht.

Bekannt sind auch Bearbeitungseinrichtungen mit eigenen Fräseinrichtungen, bei welchen somit neben reinen Drehbearbeitungen und begrenzten Bohr- und Fräsoperationen auch die Möglichkeiten für erweiterte Fräs- oder Bohroperationen geschaffen werden. Diese Fräseinrichtungen sind in X- und Z-Richtung der Bearbeitungseinrichtung verfahrbar, wobei die Frässpindel mit einer Drehachse D parallel zur X-Z-Ebene rotiert bzw. stufenlos verdrehbar ist, sowie um die Y-Achse verschwenkbar ist. Mit einer derartigen Fräseinrichtung sind zusätzlich vielseitige Fräs- und/oder Bohroperationen am Werkstück durchführbar.

Für eine derartige Fräseinrichtung ist zur Aufnahme in der Frässpindel ein rotationssymmetrischer Werkzeugkopf zur Drehbearbeitung bekannt, welcher vier unterschiedliche Wendeschneidplatten aufweist, die durch gezieltes maschinelles Verdrehen des Werkzeugkopfes in der Frässpindel nacheinander zum Einsatz gebracht werden können.
Die Wendeschneidplatten sind dabei derart um die Drehachse D des Werkzeugkopfes angeordnet, dass die einzelnen Werkzeugbezugsebenen Pᵣ jeweils um 90° versetzt zueinander und parallel zur Drehachse D verlaufen. Bei einer Drehbearbeitung mit einem derartigen Werkzeugkopf, können zwar nacheinander unterschiedliche Wendeschneidplatten zum Einsatz gebracht werden, bedingt durch die spezielle Anordnung der Wendeschneidplatten im Werkzeugkopf ist eine Veränderung des Anstellwinkels der einzelnen Wendeschneidplatten jedoch nur in sehr begrenztem Umfang möglich. Dadurch ist es auch mit einem derartigen Werkzeug nicht möglich, unterschiedliche Drehbearbeitungen wie Längsdrehen und Plandrehen, jeweils in beiden Richtungen mit einer einzigen Wendeschneidplatte durch gezielte Veränderung des Anstellwinkels durchzuführen.

Die US 4 683 626 beschreibt eine Drehmaschine mit einem verfahrbaren, stufenlos um die Y-Achse verschwenkbaren Werkzeugträger, dessen Spannkopf um eine Drehachse D ebenfalls stufenlos verdreht werden kann. Die Drehachse D ist in Richtung der X-Achse, senkrecht zur Y-Achse und senkrecht zur Z-Achse angeordnet. Die Werkzeugbezugsebenen Pᵣ durch die Schneiden senkrecht zur angenommenen Schnittrichtung verlaufen parallel zur Drehachse D des Spannkopfes. Eine Anpassung des Anstellwinkels der Schneidkante zum Werkstück während des Zerspanungsvorganges durch Verdrehen des Spannkopfes um seine Drehachse D ist bei einer derartigen Drehmaschinenanordnung in nur sehr beschränktem Umfang durchführbar.

Die Aufgabe der vorliegenden Erfindung ist es daher, ein Verfahren zur Drehbearbeitung unter Verwendung eines Werkzeugkopfes zu schaffen, bei dem auch schon unter Verwendung eines einzigen Schneideinsatzes in praktisch jeder gebräuchlichen Form mehrere unterschiedliche Drehoperationen, wie beispielsweise Längs- und Plandrehen unter verschiedenen Anstellwinkeln der Schneideinsätze, ausgeführt werden können. Gleichzeitig sollen sich die bewegten Massen für die Positionierung des jeweils benötigten Schneideinsatzes gegenüber bekannten Verfahren deutlich verringern, damit der Aufwand an Antriebs- und Steuertechnik wesentlich kostengünstiger gestaltet werden kann.

Erfindungsgemäß wird dies durch ein Verfahren und eine Vorrichtung nach Anspruch 1 und 3 erreicht.

Durch eine derartige, völlig neuartige, verdrehbare Anordnung des Werkzeugkopfes und der damit bestückten Schneideinsätze, kann bei jedem sich im Einsatz befindenden Schneideinsatz der bei der Zerspanung notwendige Anstellwinkel durch Verdrehen des Werkzeugkopfes um seine Drehachse D gezielt der jeweiligen zu bearbeitenden Stelle fortlaufend angepasst werden, so dass unterschiedliche Werkzeuge bzw. Schneideinsätze für das Längsdrehen von links nach rechts, bzw. in umgekehrter Richtung sowie für das Plandrehen ebenfalls in beiden Richtungen, vermieden werden können. Alle diese unterschiedlichen Drehbearbeitungen können gleichermaßen gut mit einem einzigen Schneideinsatz bzw. Werkzeug durchgeführt werden.

Eine Anordnung des Werkzeugkopfes mit einer Drehachse D die einen Winkel α von weniger als 90° mit der X-Achse einschließt, kann dann von Vorteil sein, wenn sehr große Werkstücke zu bearbeiten sind. In diesen Fällen wird durch das Verdrehen des Werkzeugkopfes um die Drehachse D die Schneidenhöhe verändert und muss durch Verfahren des Werkzeugkopfes in Richtung Y-Achse korrigiert werden. Vorteilhafterweise schließt die Drehachse D des Werkzeugkopfes jedoch einen Winkel α von 90° mit der X-Achse ein.

Wenn der Werkzeugkopf mit mehreren Schneideinsätzen bestückt ist, sind diese vorzugsweise derart angeordnet, dass die Werkzeugbezugsebenen Pᵣ der einzelnen Schneideinsätze in einer gemeinsamen Werkzeugbezugsebene Pᵣ zusammenfallen, die unter einem Winkel β von 90° zur Drehachse D des Werkzeugkopfes verläuft. Auf diese Weise kann bei einem Wechsel des Schneideinsatzes durch Verdrehen des Werkzeugkopfes eine Korrektur des Werkzeugkopfes in Richtung Y-Achse zur korrekten Festlegung der Schneidhöhe entfallen.

Der Werkzeugkopf kann mit einem oder mit mehreren gleichen Schneideinsätzen bestückt werden, welche nach einem Verschleiß eines Schneideinsatzes nacheinander durch Verdrehen des Werkzeugkopfes um seine Drehachse D zum Einsatz gebracht werden. Für spezielle Bearbeitungen können im selben Werkzeugkopf auch Schneideinsätze unterschiedlicher Geometrien vorgesehen werden, um die Anwendungsmöglichkeiten noch zu erweitern

Ebenso kann es von Vorteil sein, die Schneideinsätze derart anzuordnen, dass die Werkzeugbezugsebenen Pᵣ der einzelnen Schneideinsätze in unterschiedlichen, in Bezug auf die Drehachse D parallel übereinander angeordneten, gemeinsamen Werkzeugbezugsebenen Pᵣ zusammenfallen. Auf diese Weise können besonders viele Schneideinsätze in platzsparender Weise angeordnet werden, wodurch der Werkzeugkopf auch bei Verwendung vieler Schneideinsätze sehr kompakt ausgeführt werden kann.

Ebenso ist es von Vorteil, wenn die Bearbeitungseinrichtung, zur Bestückung mit mehreren erfindungsgemäßen Werkzeugköpfen, mehrere nacheinander in Arbeitsposition bringbare Aufnahmen aufweist, wodurch auf einfache Weise die Bestückung der Bearbeitungseinrichtung mit einer Vielzahl von gleichen oder auch unterschiedlichen Schneideinsätze mit oder ohne Werkzeughalter ohne zu große zu bewegende Massen erfolgen kann.
In einer weiteren Ausgestaltung dazu können dann auch bereits vorbestückte Werkzeugköpfe aus einem geeigneten Werkzeugmagazin automatisch entnommen und gewechselt werden.

Die Drehmaschinen bzw. Bearbeitungseinrichtungen zur Durchführung des erfindungsgemäßen Verfahren müssen lediglich mit einer oder mehreren möglichst universell verfahrbaren maschinell feinstufig bzw. stufenlos verdrehbaren Aufnahmen, mit einer Drehachse D in einem Winkelbereich von 45° bis 90° zur X-Achse , die auch senkrecht zur Z-Achse des Bearbeitungszentrums ausgerichtet werden kann, ausgestattet werden, um die entsprechenden Werkzeugköpfe aufzunehmen. Da die Massen der Werkzeugköpfe äußerst klein sind, können die Antriebe zum Verfahren und Verdrehen der Aufnahmen im Vergleich zu bisherigen Einrichtungen, bei denen einzelne Bearbeitungswerkzeuge mit eigenem Werkzeughalter auf großvolumigen Revolvern montiert sind, deutlich kompakter und einfacher gehalten werden. Die Bewegung des Werkzeugkopfes in der Aufnahme kann mit weniger Aufwand schneller und präziser erfolgen. Bei der Auslegung dieser Antriebe ist lediglich darauf zu achten, dass die bei der Zerspanung auftretenden Kräfte vollständig aufgenommen werden können.

Wird der Antrieb für die Aufnahme des Werkzeugkopfes derart vorgesehen, dass der Werkzeugkopf nicht nur verdrehbar, sondern auch schnell umlaufend bewegt werden kann, können bei Verwendung eines Fräswerkzeuges als Werkzeugkopf auch Fräsbearbeitungen durchgeführt werden.

Im Folgenden wird die Erfindung anhand von Zeichnungen näher erläutert.
Es zeigen:
- Figur 1: die Prinzipdarstellung eines Schrägbettdrehmaschine nach dem Stand der Technik, welche nach bekannten Verfahren arbeitet, in Schrägansicht
- Figur 2: die Prinzipdarstellung einer Bearbeitungseinrichtung für Dreh- und Fräsbearbeitungen nach dem Stand der Technik, welche nach bekannten Verfahren arbeitet, in Schrägansicht
- Figur 3: einen vergrößerten Ausschnitt der Bearbeitungseinrichtung nach Figur 2
- Figur 4: die Prinzipdarstellung einer erfindungsgemäßen Schrägbettdrehmaschine, welche nach dem erfindungsgemäßen Verfahren arbeitet, in Schrägansicht
- Figur 5: einen vergrößerten Ausschnitt der Schrägbettdrehmaschine nach Figur 4
- Figur 6: die Prinzipdarstellung einer Variante einer erfindungsgemäßen Schrägbettdrehmaschine, welche nach dem erfindungsgemäßen Verfahren arbeitet, in Schrägansicht
- Figur 7: einen Werkzeugkopf zur Durchführung des erfindungsgemäßen Verfahrens, in Schrägansicht
- Figur 8: einen zweiten Werkzeugkopf zur Durchführung des erfindungsgemäßen Verfahrens, in Schrägansicht
- Figur 9: einen dritten Werkzeugkopf zur Durchführung des erfindungsgemäßen Verfahrens, in Schrägansicht
- Figur 10: die schematische Darstellung eines Bearbeitungsbeispiels unter Anwendung des erfindungsgemäßen Verfahrens

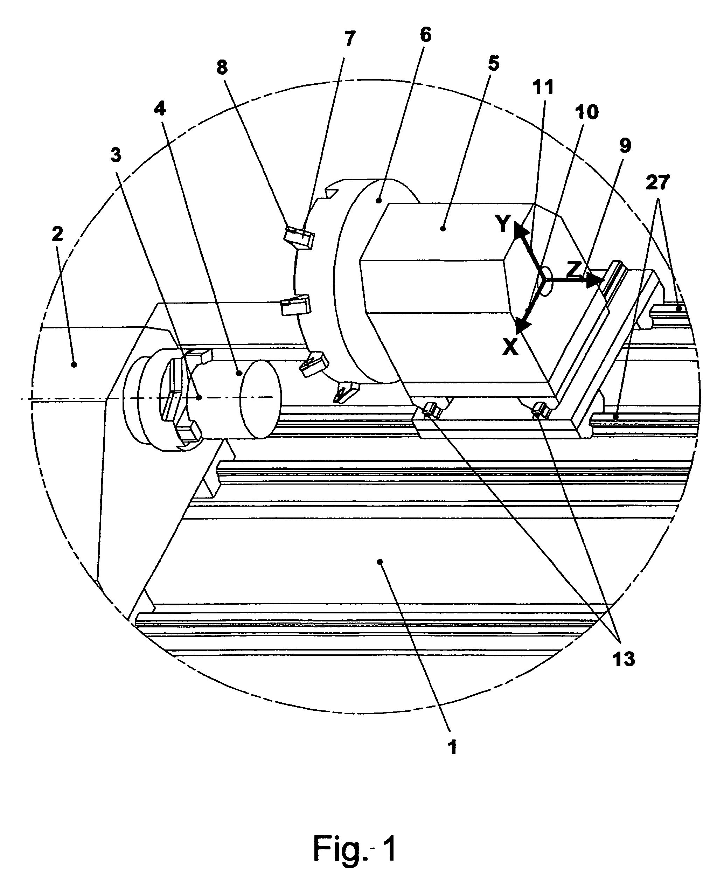

Figur 1 zeigt eine Schrägbettdrehmaschine entsprechend dem Stand der Technik, bestehend aus dem schräg gestellten Maschinenbett -1-, dem Spindelstock -2- mit Arbeitsspindel und Spannvorrichtung zur Aufnahme des Werkstückes -4-, welche um die Spindelachse -3- rotieren, sowie aus dem Werkzeugschlitten -5- zur Aufnahme des Werkzeugrevolvers -6- mit verschiedenen Werkzeughaltern -7- mit Schneideinsätzen -8- zur Bearbeitung des Werkstückes -4-. Die Z-Achse -9- der Drehmaschine liegt parallel zur Spindelachse -3-. Die X-Achse -10-, die Hauptachse in der Positionierebene, liegt radial zur Achse des Werkstückes -4-. Die Y-Achse -11- ergibt sich automatisch nach der Definition des rechtshändigen, rechtwinkeligen Koordinatensystems. Der Werkzeugschlitten -5- ist in Richtung Z-Achse -9- auf entsprechenden Führungen -27- des Maschinenbettes -1- verfahrbar. Über Führungen -13- ist der Werkzeugschlitten -5- in Richtung X-Achse -10- verfahrbar. Der stirnseitig am Werkzeugschlitten -5- befestigte Werkzeugrevolver -6- ist um die Z-Achse -9- verdrehbar, so dass der für die jeweilige Drehoperation benötigte Werkzeughalter -7- mit festgeklemmtem Schneideinsatz -8- in Arbeitsposition gebracht werden kann. Da die Werkzeughalter -7- starr im Werkzeugrevolver -6- befestigt sind, ist es für Drehoperationen, die einen geänderten Anstellwinkel des Schneideinsatzes -8- erfordern, notwendig, durch Drehung des Werkzeugrevolvers -6- den entsprechenden Werkzeughalter -7- in Arbeitsposition zu bringen, der den Schneideinsatz -8- mit dem gewünschten Anstellwinkel aufweist. Da jeder Schneideinsatz -8- auf einem eigenen Werkzeughalter -7- aufgespannt ist, muss der Werkzeugrevolver -6- entsprechend großvolumig ausgeführt sein. Die bewegten Massen sind daher groß und die Antriebseinheiten für den Werkzeugrevolver müssen entsprechend stark ausgeführt werden. Verbunden mit der Notwendigkeit einer schnellen und präzisen Bewegung des Werkzeugrevolvers -6- ist ein entsprechend hoher konstruktiver Aufwand notwendig.

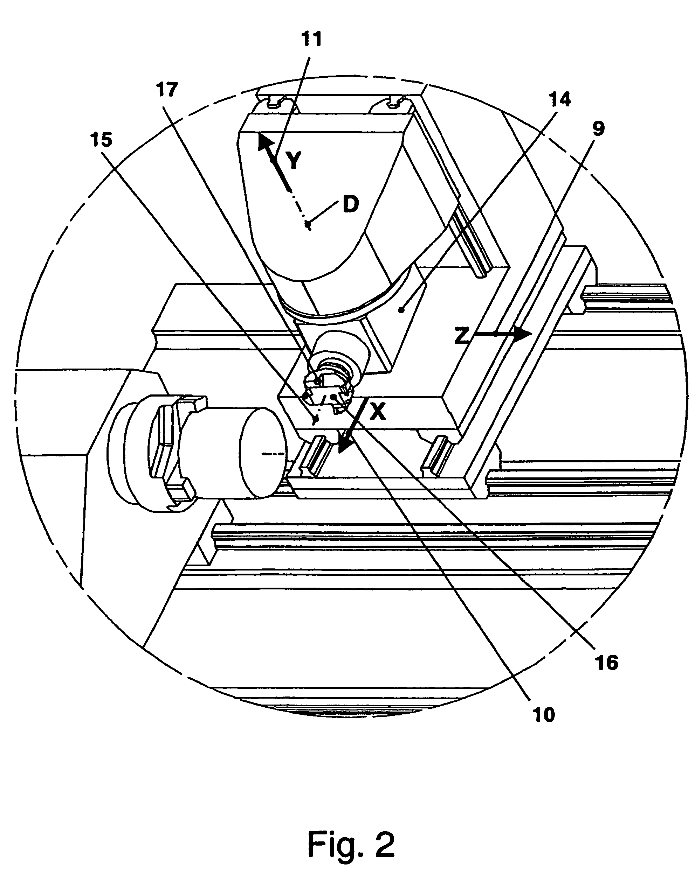

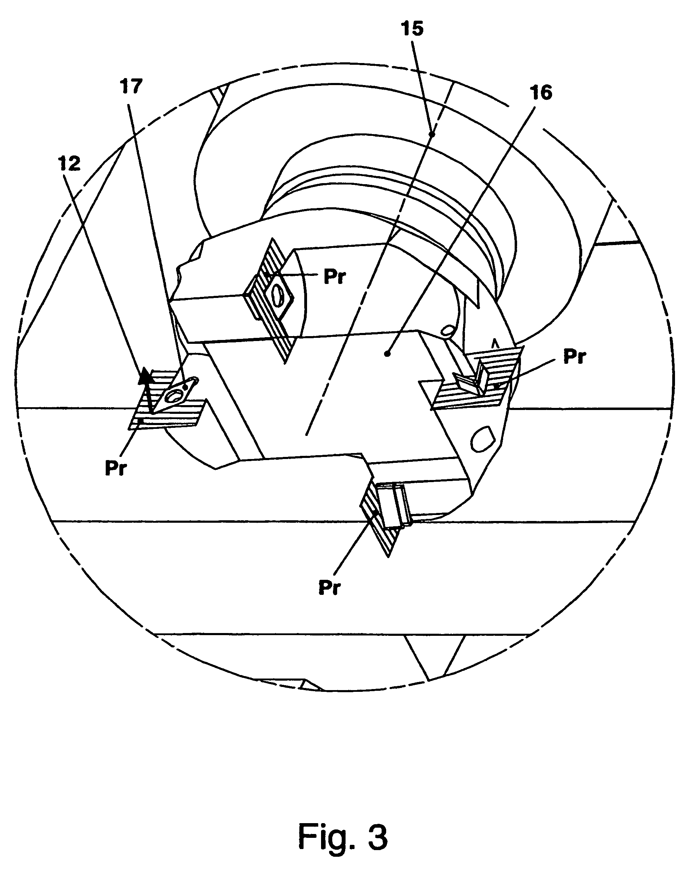

Die Figuren 2 und 3 zeigen eine Schrägbettbearbeitungseinrichtung, entsprechend dem Stand der Technik in der neben Drehbearbeitungen auch Fräsbearbeitungen durchgeführt werden können. Zusätzlich zum prinzipiellen Aufbau der Bearbeitungseinrichtung entsprechend der Schrägbettdrehmaschine nach Figur 1 weist diese Bearbeitungseinrichtung eine Fräseinrichtung -14- auf. Die Frässpindelachse -15- dieser Fräseinrichtung -14- rotiert um eine Drehachse D, welche in der von der X-Achse -10- und der Z-Achse -9- gebildeten Ebene um die Y-Achse -11- verschwenkbar ist. Die Frässpindel ist darüber hinaus um die Frässpindelachse -15- motorisch stufenlos verdrehbar. Die Frässpindel ist mit einem speziellen Werkzeugkopf -16- bestückt, mit dem Dreharbeiten ausgeführt werden können. Der Werkzeugkopf -16- ist mit vier Schneideinsätzen -17- bestückt, die jeweils so um 90° gegeneinander versetzt sind, dass auch ihre Werkzeugbezugsebenen Pᵣ senkrecht zur angenommenen Schnittrichtung -12- um jeweils 90° versetzt zueinander verlaufen. Die einzelnen Schneideinsätze -17- werden durch Verdrehen der Frässpindel um die Frässpindelachse -15- um 90°, nacheinander in Arbeitsposition gebracht. Durch die Verschwenkbarkeit der Frässpindel in der von der X-Achse -10- und Z-Achse -9- gebildeten Ebene um die Y-Achse -11- ist eine geringfügige Veränderung des Anstellwinkels der jeweils im Einsatz befindlichen Schneideinsätze -17- möglich. Diese Veränderung ist aufgrund der Bauweise des Werkzeugkopfes -16- nur in geringem Umfang möglich. Das Längs- und Plandrehen mit ein und demselben Schneideinsatz -17- ist nur mit wenigen Schneideinsatzformen möglich. Die Werkstückzugänglichkeit ist bei einem derartigen Werkzeugkopf -16- sehr stark eingeschränkt.

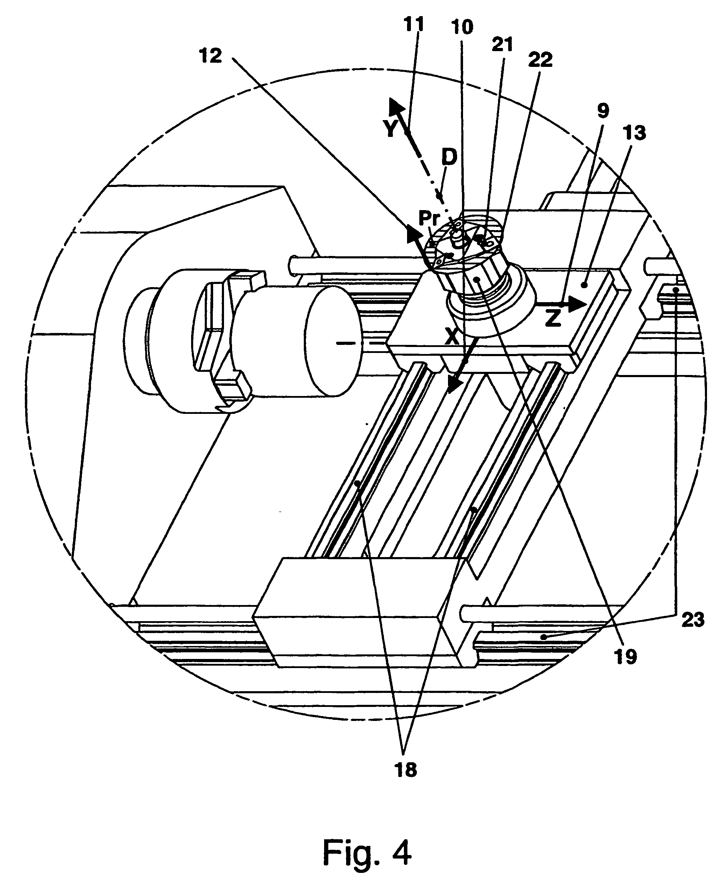

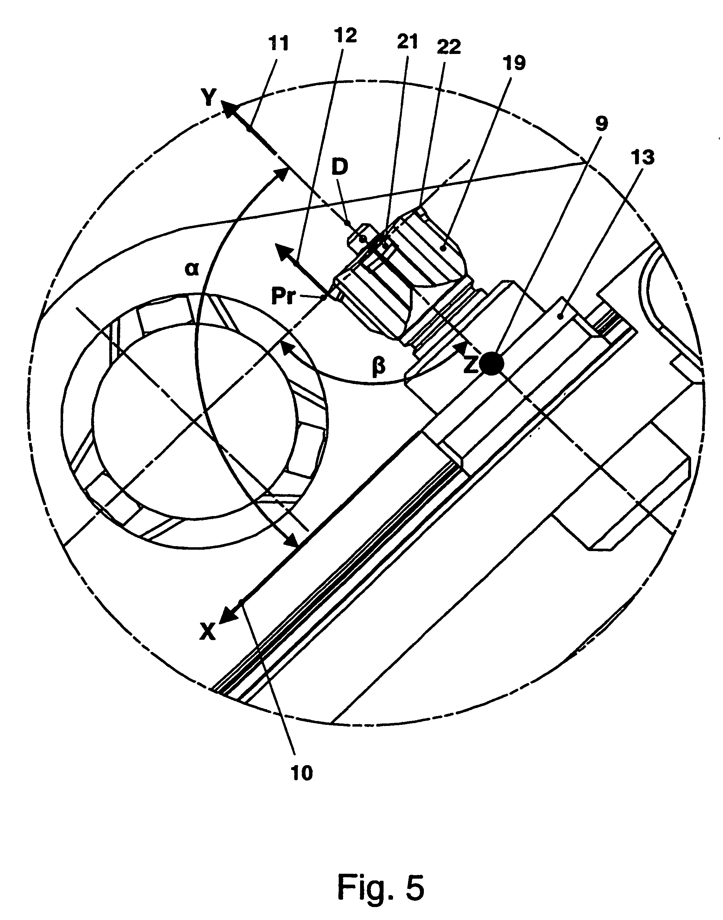

Die Figuren 4 und 5 zeigen eine Schrägbettdrehmaschine entsprechend der Erfindung, mit einem Werkzeugkopf -19-, der über eine entsprechende Aufnahme in einem Werkzeugschlitten -13- über die Führungen -18- in Richtung X-Achse -10-und über die Führungen -23- in Richtung Z-Achse -9- verfahrbar ist. Der Werkzeugkopf -19- weist eine Drehachse D auf, die mit der X-Achse -10- einen Winkel α von 90° einschließt und zur Z-Achse -9- der Drehmaschine senkrecht verläuft. Der Werkzeugkopf -19- ist um diese Drehachse D maschinell stufenlos verdrehbar. Der Werkzeugkopf -19- ist mit drei Schneideinsätzen -21- bestückt, die derart angeordnet sind, dass die aktiven Schneidecken -22- aller Schneideinsätze -21- auf einer gemeinsamen Werkzeugbezugsebene Pᵣ senkrecht zur angenommenen Schnittrichtung -12- liegen, welche unter einem Winkel β von 90° zur Drehachse D des Werkzeugkopfes -19- verläuft. Durch eine derartige Anordnung der Schneideinsätze -21- und die stufenlose Verdrehbarkeit des Werkzeugkopfes -19- kann der Anstellwinkel des jeweils in Einsatz stehenden Schneideinsatzes -21- beliebig eingestellt werden, insbesondere kann ein- und derselbe Schneideinsatz -21- mit dem frei wählbaren Anstellwinkel sowohl zum Längs-, als auch zum Plandrehen verwendet werden.

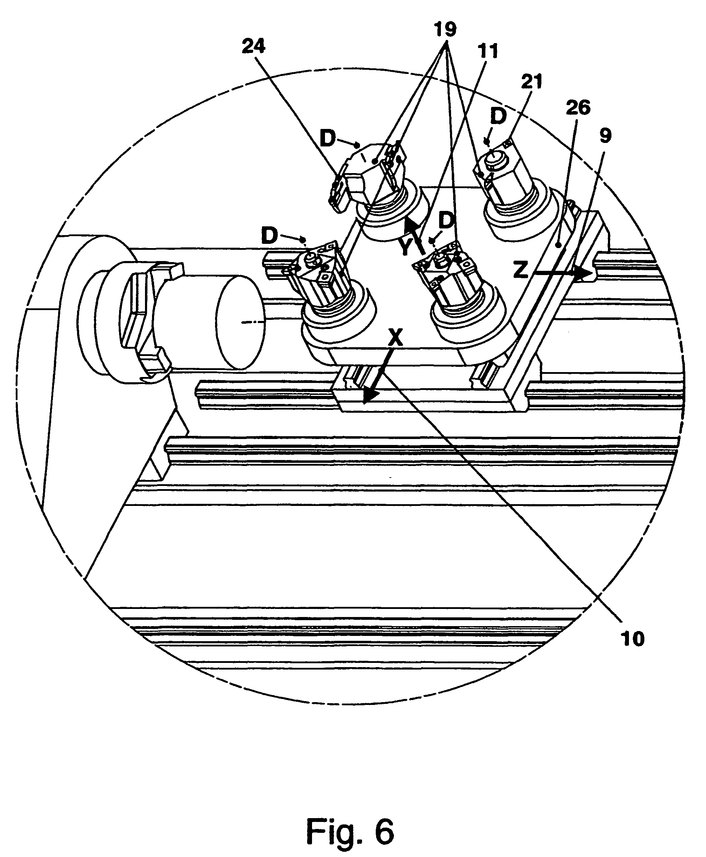

Figur 6 zeigt ebenfalls eine Schrägbettdrehmaschine entsprechend der Erfindung, bei welcher ein Werkzeugrevolver -26- mit Aufnahmen zur Bestückung mit vier Werkzeugköpfen -19- vorgesehen ist, die jeweils einzeln zum Einsatz gebracht werden können. Auf diese Art und Weise kann die Drehmaschine mit einer großen Zahl gleicher oder unterschiedlicher Schneideinsätze -21- bzw. Werkzeughaltern -24- bestückt werden, ohne dass die jeweils zu bewegende Masse zu groß wird.

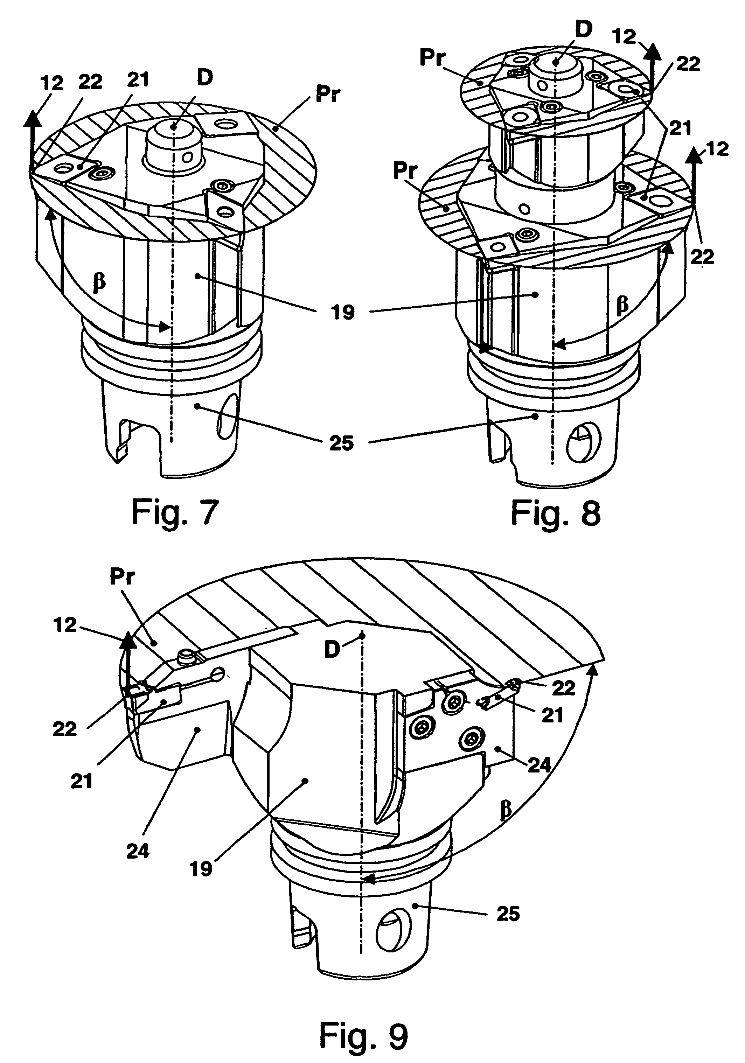

Die Figuren 7 bis 9 zeigen drei unterschiedliche Varianten von Werkzeugköpfen -19- zur Durchführung des erfindungsgemäßen Verfahrens. Der Werkzeugkopf -19- nach Figur 7 ist mit drei unterschiedlichen Schneideinsätzen -21- bestückt, wobei die Werkzeugbezugsebenen Pᵣ der einzelnen Schneideinsätze -21- durch die aktiven Schneidecken -22- senkrecht zur angenommenen Schnittrichtung -12- in einer gemeinsamen Werkzeugbezugsebene Pᵣ, die unter einem Winkel β von 90° zur Drehachse D des Werkzeugkopfes -19- verläuft, zusammenfallen. Beim Werkzeugkopf -19- nach Figur 8 sind sechs unterschiedliche Schneideinsätze -21- derart angeordnet, dass die Werkzeugbezugsebenen Pᵣ von drei Schneideinsätzen -21- durch die aktiven Schneidecken -22- senkrecht zur angenommenen Schnittrichtung -12- in einer ersten gemeinsamen Werkzeugbezugsebene Pᵣ unter einem Winkel β von 90° zur Drehachse D des Werkzeugkopfes -19- zusammenfallen, während die Werkzeugsbezugsebenen Pᵣ der restlichen drei Schneideinsätze -21- durch die aktiven Schneidecken -22- in einer zweiten gemeinsamen Werkzeugbezugsebene Pᵣ zusammenfallen, die mit Abstand parallel zur ersten gemeinsamen Werkzeugbezugsebene Pᵣ verläuft.
Der Werkzeugkopf nach Figur 9 ist mit zwei Werkzeughaltern -24- zum Stechen mit Schneideinsätzen -21- bestückt, wobei die Werkzeugsbezugseben Pᵣ der einzelnen Schneidensätze -21- durch die Schneidkanten -22- senkrecht zur angenommen Schnittrichtung -12- in einer gemeinsamen Werkzeugbezugsebene Pᵣ unter einem Winkel β von 90° zur Drehachse D des Werkzeugkopfes -19- zusammenfallen.
Alle drei Varianten der Werkzeugköpfe -19- sind mit Fußteilen -25- in Form eines Kegelstumpfes mit Plananlage zur lösbaren, raschen Verbindung und Positionierung der Werkzeugköpfe -19 - in der Aufnahme des Werkzeugschlittens -13- versehen.

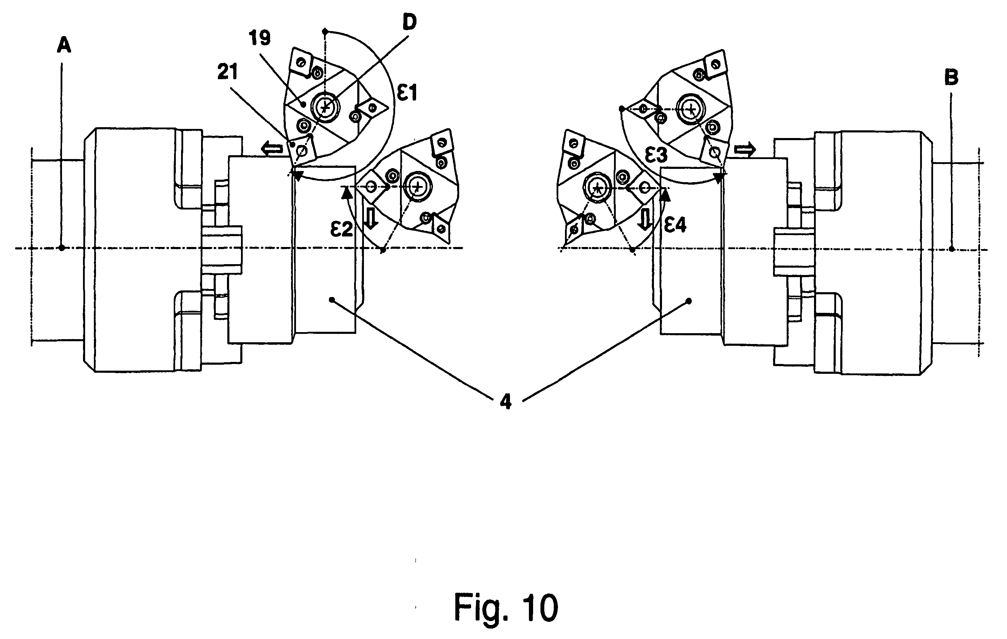

Figur 10 zeigt den prinzipiellen Arbeitsablauf mit dem an einer Drehmaschine mit zwei Arbeitsspindeln A und B zwei Werkstücke -4- mit einer einzigen Wendeschneidplatte -21- auf einem Werkzeugkopf -19- längs- und plangedreht werden. Der Werkzeugkopf -19- startet mit der Längsdrehbearbeitung des Werkstückes -4- auf der Arbeitsspindel A, wobei der aktive Schneideinsatz -21- aus der Nullstellung um den Winkel ε₁ in Arbeitsposition gebracht wurde.
Nach Beendigung der Längsdrehbearbeitung wird der aktive Schneideinsatz-21- um den Winkel ε₂ weitergedreht und in dieser neuen Position die Plandrehbearbeitung des Werkstückes -4- auf der Arbeitsspindel A durchgeführt.
Nach Beendigung dieser Plandrehoperation wird der Werkzeugkopf -19- um den Winkel ε₃ zurückgedreht und führt mit dem aktiven Schneideinsatz -21- die Längsdrehbearbeitung des Werkstückes -4- auf der Arbeitsspindel B durch. Nach Beendigung der Längsdrehbearbeitung an dieser Arbeitsspindel wird der Werkzeugkopf -19- um den Winkel ε₄ weiter zurückgedreht und führt mit dem aktiven Schneideinsatz -21- die Plandrehbearbeitung des Werkstückes -4- an der Arbeitsspindel B durch.

## Patentansprüche

1. Verfahren zur Drehbearbeitung auf einer Drehmaschine oder einer Bearbeitungseinrichtung unter Verwendung eines zur Bearbeitung verfahrbaren Werkzeugkopfes (19) mit einem Fußteil, zur rasch lösbaren Verbindung mit einer Aufnahmevorrichtung, über welche er mit einer Drehachse D im Zuge der Bearbeitung maschinell verdreht werden kann und der mit einem oder mehreren Schneideinsätzen (21) bestückt ist, die während der Bearbeitung einzeln zum Einsatz kommen,
**dadurch gekennzeichnet,**
**dass** das Verfahren auf einer Drehmaschine bzw. einer Bearbeitungseinrichtung durchgeführt wird, bei der die Drehachse D des Werkzeugkopfes (19) in einem Winkelbereich α von 45° bis 90° zur X-Achse (10) und senkrecht zur Z-Achse (9) der Bearbeitungseinrichtung liegt und dass ein Werkzeugkopf (19) verwendet wird, dessen Schneideinsätze (21) derart angeordnet sind, dass jeder Schneideinsatz (21) eine Werkzeugbezugsebene Pᵣ durch jeweils gleiche ausgewählte Schneidenpunkte (22) senkrecht zur angenommenen Schnittrichtung (12) entsprechend DIN 6581 aufweist, die in einem Winkelbereich β von 90° bis 135° zur Drehachse D des Werkzeugkopfes (19) verläuft.

2. Verfahren zur Drehbearbeitung nach Anspruch 1, **dadurch gekennzeichnet, dass** die Drehachse D einen Winkel α von 90° mit der X-Achse (10) einschließt.

3. Werkzeugkopf (19), bestehend aus einem um eine Drehachse D verdrehbaren Grundkörper mit einem Fußteil zur rasch lösbaren Verbindung mit einer Aufnahmevorrichtung sowie aus einem oder mehreren Schneideinsätzen (21), die unmittelbar oder unter Verwendung von individuellen Werkzeughaltern (24) am Grundkörper befestigt sind, **dadurch gekennzeichnet,dass** die Schneideinsätze (21) derart angeordnet sind, dass jeder Schneideinsatz (21) bei der Drehbearbeitung eine Werkzeugbezugsebene Pᵣ durch jeweils gleiche ausgewählte Schneidenpunkte (22) senkrecht zur angenommenen Schnittrichtung (12) entsprechend DIN 6581 aufweist, die in einem Winkelbereich von 90° bis 135° zur Drehachse D des Werkzeugkopfes (19) verläuft.

4. Werkzeugkopf (19) nach Anspruch 3 mit mehreren Schneideinsätzen (21), **dadurch gekennzeichnet, dass** die Schneideinsätze (21) derart angeordnet sind, dass die Werkzeugbezugsebene Pᵣ der einzelnen Schneideinsätze (21) in einer gemeinsamen Werkzeugbezugsebene Pᵣ zusammenfallen.

5. Werkzeugkopf (19) nach Anspruch 3 mit mehreren Schneideinsätzen (21), **dadurch gekennzeichnet, dass** die Schneideinsätze (21) derart angeordnet sind, dass die Werkzeugbezugsebenen Pᵣ der einzelnen Schneideinsätze (21) in unterschiedlichen, in Bezug auf die Drehachse D parallel übereinander angeordneten gemeinsamen Werkzeugbezugsebenen Pᵣ zusammenfallen.

6. Drehmaschine bzw. Bearbeitungseinrichtung mit einer X-Achse (10) und einer Z-Achse (9) sowie mit einer Aufnahmevorrichtung und einem Werkzeugkopf (19) nach Anspruch 3, **dadurch gekennzeichnet, dass** die Drehachse D in einem Winkelbereich α von 45° bis 90° zur X-Achse (10) und senkrecht zur Z-Achse (9) liegt und die Aufnahmevorrichtung derart ausgelegt ist, dass ein in ihr aufgenommener Werkzeugkopf (19) feinstufig bzw. stufenlos verdrehbar ist.

## Claims

1. Method of effecting a turning operation on a lathe or machine tool using a tool head (19) traversable for machining, which has a foot part for rapid-release connection to a support device, by means of which it may be mechanically rotated with an axis of rotation D in the course of machining, and is equipped with one or more cutter inserts (21), which come individually into operation during machining,
**characterized in**
**that** the method is effected on a lathe and/or machine tool, in which the axis of rotation D of the tool head (19) lies in an angular range α of 45° to 90° relative to the X-axis (10) and at right angles to the Z-axis (9) of the machine tool, and that a tool head (19) is used, the cutter inserts (21) of which are disposed in such a way that each cutter insert (21) has a tool reference plane Pᵣ through in each case identical selected cutting edge points (22) at right angles to the assumed cutting direction (12) in accordance with DIN 6581, which extends in an angular range β of 90° to 135° relative to the axis of rotation D of the tool head (19).

2. Method of effecting a turning operation according to claim 1, **characterized in that** the axis of rotation D includes an angle α of 90° with the X-axis (10).

3. Tool head (19), comprising a basic body, which is rotatable about an axis of rotation D and has a foot part for the rapidly releasable connection to a support device, as well as one or more cutter inserts (21), which are fastened directly or with the use of individual tool holders (24) to the basic body, **characterized in that** the cutter inserts (21) are disposed in such a way that each cutter insert (21) during the turning operation has a tool reference plane Pᵣ through in each case identical selected cutting edge points (22) at right angles to the assumed cutting direction (12) in accordance with DIN 6581, which extends in an angular range of 90° to 135° relative to the axis of rotation D of the tool head (19).

4. Tool head (19) according to claim 3 with a plurality of cutter inserts (21), **characterized in that** the cutter inserts (21) are disposed in such a way that the tool reference plane Pᵣ of the individual cutter inserts (21) coincide in a common tool reference plane Pᵣ.

5. Tool head (19) according to claim 3 with a plurality of cutter inserts (21), **characterized in that** the cutter inserts (21) are disposed in such a way that the tool reference planes Pᵣ of the individual cutter inserts (21) coincide in different, common tool reference planes Pᵣ, which are disposed in relation to the axis of rotation D parallel one above the other.

6. Lathe and/or machine tool having an X-axis (10) and a Z-axis (9) as well as having a support device and a tool head (19) according to claim 3, **characterized in that** the axis of rotation D lies in an angular range α of 45° to 90° relative to the X-axis (10) and at right angles to the Z-axis (9) and the support device is designed in such a way that a tool head (19) accommodated therein is sensitively and/or infinitely rotatable.

## Revendications

1. Procédé de tournage sur un tour ou une installation d'usinage dans lequel est utilisée une tête d'outil (19), mobile pour les besoins de l'usinage, munie d'une embase pour une connexion -rapide à défaire- avec un dispositif de logement permettant à la tête d'outil (19) de tourner pendant l'usinage - par entraînement mécanique- autour d'un axe de rotation D, la tête d'outil étant équipée d'une ou de plusieurs plaquettes de coupe travaillant individuellement au cours des opérations d'usinage, **caractérisé en ce que** le procédé est mis en oeuvre sur un tour ou une installation d'usinage dans lequel/laquelle l'axe de rotation D de la tête d'outil (19) se situe dans une zone angulaire α comprise entre 45 et 90 degrés par rapport à l'axe X (10) et à la verticale de l'axe Z (9) de l'installation d'usinage et **en ce qu'**il est utilisé une tête d'outil (19) dont les plaquettes de coupe (21) sont agencées de telle sorte que chaque plaquette (21) présente un plan de référence d'outils Pᵣ formé par des points d'attaque (22) donnés -chaque fois identiques- perpendiculaires à la direction de coupe (12) supposée, conformément à la norme DIN 6581, lequel plan de référence d'outils s'inscrit dans une zone angulaire β comprise entre 90 et 135 degrés par rapport à l'axe de rotation D de la tête d'outil (19).

2. Procédé de tournage selon la revendication 1, **caractérisé en ce que** l'axe de rotation D forme avec l'axe X (10) un angle α de 90 degrés.

3. Tête d'outil (19) composée d'un corps mobile autour d'un axe de rotation D et muni d'une embase pour une connexion -rapide à défaire- avec un dispositif de logement, ainsi que d'une ou de plusieurs plaquettes de coupe (21) fixées sur sur le corps d'outil, soit directement soit par le biais de porte-outils (24) individuels, **caractérisée en ce que** les plaquettes de coupe (21) sont agencées de telle sorte que chaque plaquette (21) présente, lors du tournage, un plan de référence d'outils Pᵣ formé par des points d'attaque (22) donnés -chaque fois identiques- perpendiculaires à la direction de coupe (12) supposée, conformément à la norme DIN 6581, lequel plan de référence d'outils s'inscrit dans une zone angulaire comprise entre 90 et 135 degrés par rapport à l'axe de rotation D de la tête d'outil (19).

4. Tête d'outil (19) selon la revendication 3, équipée de plusieurs plaquettes de coupe (21), **caractérisée en ce que** les plaquettes (21) sont agencées de telle sorte que leurs plans de référence d'outils Pᵣ respectifs coïncident dans un plan de référence d'outils Pᵣ commun.

5. Tête d'outil (19) selon la revendication 3, équipée de plusieurs plaquettes de coupe (21), **caractérisée en ce que** les plaquettes (21) sont agencées de telle sorte que leurs plans de référence d'outils Pᵣ respectifs coïncident dans différents plans de référence d'outils Pᵣ disposés parallèlement les uns au-dessus des autres par rapport à l'axe de rotation D.

6. Tour ou installation d'usinage comportant un axe X (10) et un axe Z (9) ainsi qu'un dispositif de logement et une tête d'outil (19) selon la revendication 3, **caractérisé**(e) en ce que l'axe de rotation D se situe dans une zone angulaire α comprise entre 45 et 90 degrés par rapport à l'axe X (10) et à la verticale de l'axe Z (9) et en ce que le dispositif de logement est conçu de telle sorte qu'une tête d'outil (19) logée à l'intérieur peut être mise en rotation avec un réglage fin ou continu.
